# EUROPÄISCHE PATENTSCHRIFT

(11) **EP 2 932 336 B1**
(45) Veröffentlichungstag und Bekanntmachung des Hinweises auf die Patenterteilung: **06.05.2020**
(21) Anmeldenummer: 13814508.1
(22) Anmeldetag: 17.12.2013
(51) Int. Cl.: G05B 15/02, G05B 23/02

(54) **VERFAHREN ZUR ERMITTLUNG EINER RESSOURCENEFFIZIENZ EINER ANLAGE ZUM HERSTELLEN VON GETRÄNKEBEHÄLTNISSEN**
METHOD FOR DETERMINING AN EFFICIENCY OF RESOURCES OF A PLANT FOR PRODUCING BEVERAGE CONTAINERS
PROCÉDÉ PERMETTANT DE DÉTERMINER UNE UTILISATION EFFICACE DES RESSOURCES D'UNE INSTALLATION DESTINÉE À FABRIQUER DES CONTENANTS POUR BOISSON

(30) Priorität: 17.12.2012 DE 102012112369
(43) Veröffentlichungstag der Anmeldung: 21.10.2015
(73) Patentinhaber: Krones AG, 93073 Neutraubling (DE)
(72) Erfinder: ZÖLFL, Markus, 93073 Neutraubling (DE); LINK, Albert, 93073 Neutraubling (DE); BUCHHAUSER, Ulrich, 93073 Neutraubling (DE); OTTMANN, Norbert, 93073 Neutraubling (DE)
(74) Vertreter: Bittner, Bernhard
(86) Internationale Anmeldenummer: PCT/EP2013/076998
(87) Internationale Veröffentlichungsnummer: WO 2014/095938

(56) Entgegenhaltungen:
- WO-A1-2012/073536
- WO-A2-2010/128520
- DE-A1- 19 542 017

## Beschreibung

Die vorliegende Erfindung bezieht sich auf ein Verfahren zum Ermitteln einer Ressourceneffizienz einer Anlage zum Herstellen von Getränkebehältnissen sowie auch eine entsprechende Anlage zum Herstellen von Getränkebehältnissen und/oder Verpackungen. Bei den im Rahmen dieser Patentanmeldung beschriebenen Behältnissen kann es sich um unterschiedliche Arten an Behältnissen handeln wie etwa Kunststoffflaschen, Glasflaschen, Dosen aber auch um Behältnisse wie Umverpackungen, Kartons oder dergleichen aber auch etwa um Palettierungen. Aus dem Stand der Technik sind diverse Verfahren und Vorrichtungen zum Herstellen von Getränkebehältnissen bekannt. Dabei werden bei der Herstellung von Getränkebehältnissen unterschiedlichste Verfahrensschritte vorgenommen, wie etwa eine Blasformung von Kunststoffbehältnissen, ein Befüllen der Behältnisse, ein Verschließen der Behältnisse oder auch ein Anbringen von Etiketten an Behältnissen.

Daneben sind für die Getränkebehältnisse weitere Verfahrensschritte erforderlich, wie beispielsweise Erwärmungsvorgänge für Kunststoffvorformlinge, Sterilisationsvorgänge für Flaschenverschlüsse und dergleichen.

Die einzelnen Anlagenteile von derartigen Maschinen zum Herstellen von Getränkebehältnissen verbrauchen dabei Ressourcen in unterschiedlichster Weise, wie insbesondere Energie, Reinigungsmittel und dergleichen. Zum Zwecke vom Vergleichen wäre es wünschenswert, mittels eines objektiven Bewertungssystems eine Ressourceneffizienz einer derartigen Anlage zum Herstellen von Getränkebehältnissen darstellen zu können.

Generell weisen Maschinen und auch die hier beschriebenen Anlagenteile unterschiedliche Betriebszustände auf, wie beispielsweise einen Produktionszustand, einen Störungszustand, einen Mangelzustand, einen Anhaltezustand und dergleichen. Derartige Zustände sind dabei zeitlich erfassbar und können auch nach einem vorgegebenen Standard, wie dem sogenannten "Weihenstephaner" Standard, definiert werden.

Auch sind aus dem Stand der Technik Kennzahlensysteme bekannt, welche eine Leistungsfähigkeit einer Anlage definieren, wie beispielsweise die DIN 8782 oder auch die ABMI TC1. Über eine derartige Kennzahlensystematik können Zustände und deren Dauer durch eine entsprechende Klassifizierung geordnet werden, wie beispielsweise eine Gesamtarbeitszeit der Maschine, eine Produktionszeit, eine Betriebszeit und eine Laufzeit, in der tatsächlich das Produkt hergestellt wird. Dabei wäre es weiterhin möglich, diese zeitliche Arbeitseffizienz einer derartigen Anlage dadurch zu ermitteln, dass diejenige Zeit, in der die Anlage tatsächlich Getränkebehältnisse produziert, dividiert wird durch diejenigen Zeiten, in der die Anlage insgesamt in Betrieb ist, das heißt einschließlich geplanter Maschinenauszeiten oder solcher Zeiten, die durch Fehler auftreten. Derartige Auswertungsergebnisse sind jedoch nur teilweise ausschlaggebend für die tatsächliche Ressourceneffizienz einer derartigen Anlage.

Eine Anlage aus dem Stand der Technik ist in WO2012/073536 offenbart.

Der Erfindung liegt dabei die Aufgabe zugrunde, die Ressourceneffizienz von derartigen Anlagen zum Herstellen von Getränkebehältnissen zu ermitteln. Diese Aufgabe wird erfindungsgemäß durch den Gegenstand von Anspruch 1 erreicht.

Vorteilhafte Ausführungsformen und Weiterbildungen sind Gegenstand der Unteransprüche.

Bei einem erfindungsgemäßen Verfahren zum Ermitteln einer Ressourceneffizienz einer Anlage zum Herstellen von Getränkebehältnissen weist die Anlage wenigstens einen ressourcenverbrauchenden Anlagenteil auf, wobei der Anlagenteil wenigstens zeitweise in einem ersten Betriebszustand betrieben wird, in welchem ein Produkt hergestellt wird und der Anlagenteil in diesem Betriebszustand einen ersten Ressourcenverbrauch aufweist. Weiterhin wird der Anlagenteil wenigstens zeitweise in einem zweiten Betriebszustand betrieben und weist in diesem zweiten Betriebszustand einen zweiten Ressourcenverbrauch auf. Dabei wird wenigstens ein dem ersten Betriebszustand zuordenbarer erster Ressourcenverbrauch und wenigstens dem zweiten Betriebszustand zuordenbarer zweiter Ressourcenverbrauch bestimmt und es wird den Betriebszuständen der jeweilige Ressourcenverbrauch zugeordnet.

Erfindungsgemäß wird unter Berücksichtigung des ersten Ressourcenverbrauchs und des zweiten Ressourcenverbrauchs ein für jede Ressourceneffizienz des Anlagenteils charakteristischer Wert bestimmt.

Bevorzugt werden dabei jeweils für diesen Ressourcenverbrauch charakteristische Werte bestimmt, etwa, falls es sich bei der Ressource um Energie handelt, ein entsprechender Wert, beispielsweise in kWh. Bevorzugt werden die Ressourcenverbräuche und/oder hierfür charakteristische Daten bzw. Werte (beispielsweise Messwerte) wenigstens zeitweise und/oder wenigstens teilweise in einer Speichereinrichtung abgespeichert. Allgemein wird wenigstens ein für wenigstens einen Ressourcenverbrauch charakteristischer Wert (beispielsweise ein Messwert) in einer Speichereinrichtung abgespeichert. Dabei ist es möglich, dass die jeweiligen Ressourcenverbräuche (oder hierfür charakteristische (Mess)werte) laufend gemessen und abgespeichert werden.

Damit ist bevorzugt eine Speichereinrichtung vorgesehen, welche derart gestaltet ist, dass sie den Ressourcenverbrauch (und/oder (Mess)werte, die für diesen Ressourcenverbrauch charakteristisch sind), der jeweils in den einzelnen Betriebszuständen auftritt, speichert. Dabei wäre es möglich, dass diese Messwerte im laufenden Betrieb abgespeichert werden. So könnten die Werte jeweils in vorgegebenen Intervallen in der Speichereinrichtung abgespeichert werden. Bevorzugt können auch die Ressourcenverbräuche mehrerer Anlagenteile oder hierfür charakteristische Werte abgespeichert werden. Daneben können auch die Ressourcenverbräuche in unterschiedlichen Betriebszuständen des jeweiligen Anlagenteils abgespeichert werden, insbesondere auch in einer zeitlichen Abhängigkeit und/oder in Verbindung mit einer Information, welche die Identifizierung des Betriebszustands gestattet.

Ein Ressourcenbedarf bzw. ein Ressourcenverbrauch muss dabei nicht zwangsläufig mit der produzierenden Einheit zusammenhängen. Allerdings lässt sich bevorzugt der Ressourcenbedarf einem bestimmten Betriebszustand dieser Einheit zuordnen. Dies kommt vor allem bei Anlagenbetrachtung mit mehreren Untereinheiten (z.B. einzelne Maschinen) zum Tragen. Dabei ist es möglich, dass der Ressourcenverbrauch messtechnisch, z.B. mit Messeinrichtungen bestimmt wird. Es wäre jedoch auch eine andere Bestimmung möglich, insbesondere durch eine rechnerische Erfassung, durch (statistische) Simulationen und allgemein statistische Auswertungen. Auch wäre eine Kombination mehrerer Bestimmungsarten möglich.

Insbesondere unterscheiden sich die Ressourcenverbräuche in den unterschiedlichen Betriebszuständen. Die Betriebszustände sind dabei vorteilhaft aus einer Gruppe von Betriebszuständen ausgewählt, welche eine Arbeitszeit der Anlage aufweisen, eine Produktionszeit, welche sich aus der Arbeitszeit abzüglich der eingeplanten Stillstandzeiten zusammensetzt, eine Gesamtzeit, welche sich wiederum aus der Produktionszeit abzüglich eventueller externen Störungen zusammensetzt und einer eigentlichen Betriebszeit, in der tatsächlich produziert wird, welche sich aus der oben erwähnten Produktionszeit abzüglich tatsächlicher Eigenstörungen der Anlage zusammensetzt.

Es wird jedoch darauf hingewiesen, dass ein Betriebszustand nicht zwangsweise mit den entsprechenden (Neben-) Zeiten übereinstimmen muss, bzw. stets eine Zuordnung zu einem bestimmten Zeitfenster möglich ist. So können beispielsweise die Zeitfenster für einen geplanten und einen ungeplanten Stillstand eines Anlagenteils unterschieden, obwohl diese den gleichen Ressourcenverbrauch aufweisen bzw. sich der Betriebszustand steuerungstechnisch nicht ändert. Der Ressourcenbedarf muss sich bei ändernden Betriebszuständen oder Zeiten nicht zwingend ändern.

Vorteilhaft sind dabei Betriebszustände alleinstehend und weisen keine untergeordneten Zustände auf. Es wäre jedoch möglich, dass die jeweiligen Zeitfenster jeweils noch unterteilt sind.

Damit werden vorteilhaft mehrere Betriebszustände berücksichtigt, beispielsweise vier Betriebszustände, die sich bevorzugt jeweils durch unterschiedliche Ressourcenverbräuche unterscheiden.

Bei einem weiteren vorteilhaften Verfahren werden auch die Zeitspannen der einzelnen Betriebszustände gemessen. Es kann jedoch auch ausreichend sein, lediglich den absoluten, bzw. relativen Verbrauch der jeweiligen Ressource festzustellen.

Vorteilhaft wird der Ressourcenverbrauch in einem laufenden Betrieb der Anlage bzw. des Anlagenteils bestimmt.

Bei einem weiteren vorteilhaften Verfahren wird der Anlagenteil in mehr als zwei unterschiedlichen Betriebszuständen betrieben, wie oben dargestellt.

Bei einem weiteren vorteilhaften Verfahren ist die Ressource aus einer Vielzahl von Ressourcen ausgewählt, welche Energie, insbesondere elektrische Energie, Wärme, Medien zum Behandeln der Behältnisse, (Betriebs)kosten, Personalaufwand und dergleichen enthält. So kann beispielsweise ein Energiebedarf bzw. Energieverbrauch des Anlagenteils ermittelt werden, es kann jedoch auch eine andere Ressource untersucht werden, wie etwa ein Verbrauch eines Sterilisationsmittels zum Sterilisieren der Anlage. In diesem Fall kann es sich bei dem Betriebszustand auch um denjenigen Zustand handeln, in dem die Anlage sterilisiert wird, der gegebenenfalls auch von dem eigentlichen Produktionszustand abweichen kann. Insbesondere handelt es sich jedoch bei der festzustellenden Ressource nicht um das eigentliche Produkt bzw. dessen Bestandteile, beispielsweise Behältnisse, Etiketten, Verschlüsse und dergleichen. Eine weitere Möglichkeit für die Ressource könnte beispielsweise auch die Druckluft sein, die einer Blasformmaschine zum Umformen der Kunststoffvorformlinge zu den Kunststoffbehältnissen zugeführt wird.

Allgemein werden daher bevorzugt (Betriebs)zustände zusammengefasst und/oder zugeordnet. Bevorzugt wird jedoch nicht oder nicht nur die Zeit bzw. der Zeitraum, die für die Wertschöpfung aufgebracht wurde, ins Verhältnis zu einer Gesamtzeit gesetzt wird, sondern ein Ressourcen bzw. Medienverbrauch, der für die Wertschöpfung benötigt wurde.

Bei einem weiteren vorteilhaften Verfahren weist die Anlage eine Vielzahl von ressourcenverbrauchenden Anlagenteilen auf und für wenigstens zwei Anlagenteile wird jeweils ein für die Ressourceneffizienz dieses jeweiligen Anlagenteils charakteristischer Wert bestimmt.

Falls, wie oben erwähnt, die jeweiligen Zeitdauern der Betriebszustände ermittelt werden, ist es möglich, zu jedem einzelnen Zeitäquivalent, beispielsweise über die entsprechende Durchschnittsleistung, ein absolutes Medienäquivalent bzw. ein Ressourcenverbrauch zu ermitteln. Aus diesen Medienäquivalenten kann entsprechend ein Kennzahlensystem gebildet werden, welches eine entsprechende Vorrichtung beschreibt.

Auf diese Weise können anstelle von Zeitäquivalenten Medienäquivalente eingeführt werden.

Bei einem weiteren bevorzugten Verfahren wird für wenigstens einen Anlagenteil kein diesem Anlagenteil zuordenbarer Ressourcenverbrauch bestimmt.

So kann insbesondere für die Messung der Energieeffizienz eine Kennzahl eingeführt werden.

Oftmals können, insbesondere bei komplexen Maschinen nicht alle Maschinen bzw. Anlagenteile mit einer vollständigen Ressourcen- bzw. Energie- und Medienmessung ausgestattet werden, da dies zu zu hohen Kosten führen würde.

Im Rahmen dieses bevorzugten Verfahrens wird daher vorgeschlagen, bloß einen Teil der Anlagenteile mit derartigen Messeinrichtungen auszustatten. Dabei kann es sich beispielsweise um solche Anlagenteile handeln, die einen besonders hohen Ressourcenverbrauch aufweisen oder deren Ressourcenverbräuche sich in Abhängigkeit von den jeweiligen Betriebszuständen stark unterscheiden. Der weitere Verbrauch der restlichen Anlagenteile kann beispielsweise über den Gesamtverbrauch (mittelbar) ermittelt werden.

Gleichwohl ist es jedoch möglich, dass alle an dem wertschöpfenden Prozess beteiligten Maschinen in der Messung berücksichtigt werden. Vorteilhaft werden dabei unterstützende Prozesse separat betrachtet, wie beispielsweise eine CIP-Reinigung der Anlage oder dergleichen.

Bevorzugt handelt es sich bei dem oben genannten charakteristischen Wert für die Ressourceneffizienz um eine Kennzahl, welche die Ressourceneffizienz, beispielsweise Energieeffizienz dieses Systems beschreibt. Diese Kennzahl kann dabei für jede Energieform und auch jede Art Ressource bzw. jedes Medium gebildet werden. Auch ist es möglich, die einzelnen oben erwähnten Medienäquivalente zu addieren. Als Folge daraus können Bereichs- und auch Fabrikkennzahlen ermittelt werden.

Bei einem weiteren bevorzugten Verfahren werden auch die erwähnten Medienäquivalente bzw. Ressourcenäquivalente umgerechnet, so dass in der Folge auch auf Fabrikebene Kennzahlen etwa für die elektrische Energie, für die thermische Energie oder auch Ressourcen wie Wasser abgeleitet werden können. Auch ist es denkbar, mehr als die genannten Kennzahlen abzuleiten.

Vorteilhaft kann der Verbrauch einer bestimmten Ressource in den unterschiedlichen (klassifizierten) Produktionszuständen, beispielsweise durch Summen- oder Mittelwertbildung aufgenommen werden. Wie erwähnt, kann der charakteristische Wert für eine bestimmte Ressource auch für eine Kombination mehrerer Anlagenteile bestimmt werden. Dabei können auch jedem Anlagenteil jeweils Speichereinheiten zugeordnet werden, die zur Aufnahme der jeweiligen Ressourcenverbräuche dienen. Daneben kann auch mittels einer Verrechnungseinheit die Summe der Inhalte dieser einzelnen Speichereinheiten, bzw. der einzelnen Ressourcenverbrauchswerte aufaddiert und bevorzugt auch gespeichert werden.

Bei einem weiteren Verfahren wird ein Verhältnis aus einem Ressourcenverbrauch für die eigentliche Produktionsaufgabe zu dem gesamten Ressourcenverbrauch errechnet und bevorzugt auch gespeichert. Dabei können die eigentlichen Aufgaben der jeweiligen Anlagenteile gleich oder auch unterschiedlich sein.

Bei einem weiteren bevorzugten Verfahren wird eine für eine gesamte Anlage charakteristische Gesamtressourceneffizienz unter Berücksichtigung der Ressourceneffizienzen wenigstens zweier Anlagenteile bestimmt. Bevorzugt wird eine Gesamtressourcenkoeffizienz unter Berücksichtigung der Ressourcenkoeffizienzen einer Vielzahl von Anlagenteilen bestimmt.

Bei einem weiteren vorteilhaften Verfahren ist wenigstens ein Anlagenteil aus einer Gruppe von Anlagenteilen ausgewählt, welche Blasformmaschinen, Sterilisationseinrichtungen, Fülleinrichtungen zum Befüllen von Behältnissen, Verschließeinrichtungen zum Verschließen von Behältnissen, Erwärmungseinrichtungen zum Erwärmen von Kunststoffvorformlingen und dergleichen enthält.

Bei einem weiteren vorteilhaften Verfahren wird der für die Ressourceneffizienz des Anlagenteils charakteristische Wert durch wenigstens eine Quotientenbildung ermittelt. Dabei werden, wie oben erwähnt, insbesondere die produzierenden Zustände mit anderen Zuständen bzw. allen Zuständen in ein Verhältnis gesetzt.

Die vorliegende Erfindung ist weiterhin auf eine Vorrichtung zum Herstellen von mit Flüssigkeiten befüllten Behältnissen gerichtet, welche einen ersten ressourcenverbrauchenden Anlagenteil aufweist, der zeitweise in einem ersten Betriebszustand betreibbar ist und derzeitweise in einem zweiten Betriebszustand betreibbar ist, wobei sich der erste Betriebszustand und der zweite Betriebszustand zumindest hinsichtlich des Ressourcenverbrauchs unterscheiden und wobei ein Betriebszustand ein Produktionszustand des Anlagenteils ist.

Erfindungsgemäß weist die Vorrichtung eine Erfassungseinrichtung auf, welche den Ressourcenverbrauch des Anlagenteils ermittelt sowie eine Zuordnungseinrichtung bzw. Klassifizierungseinrichtung, welche dem ersten Betriebszustand einen für diesen Betriebszustand charakteristischen ersten Ressourcenverbrauch zuordnet und welche dem zweiten Betriebszustand einen für diesen zweiten Betriebszustand charakteristischen zweiten Ressourcenverbrauch zuordnet sowie eine Prozessoreinrichtung, welche unter Berücksichtigung des ersten Ressourcenverbrauchs und des zweiten Ressourcenverbrauchs einen für die Ressourceneffizienz des Anlagenteils charakteristischen Wert bestimmt.

Vorteilhaft führt dabei dieser erste Anlagenteil einen bestimmten Prozessschritt bei der Herstellung von mit Flüssigkeiten befüllten Behältnissen durch. Vorteilhaft weist die Vorrichtung wenigstens zwei und besonders bevorzugt eine Vielzahl derartiger Anlagenteile auf, wobei bevorzugt für jeden einzelnen dieser Anlagenteile eine Ressourceneffizienz ermittelt wird.

Besonders bevorzugt weist die Vorrichtung einen zweiten Anlagenteil auf, der zeitweise in einem ersten Betriebszustand betreibbar ist und der zeitweise in einem zweiten Betriebszustand betreibbar ist, wobei sich der erste Betriebszustand und der zweite Betriebszustand zumindest hinsichtlich des Ressourcenverbrauchs unterscheiden und wobei ein Betriebszustand ein Produktionszustand des Anlagenteils ist. Vorteilhaft verbrauchen die beiden Anlagenteile jedoch die gleichen Ressource(n).

Vorteilhaft bestimmt die Prozesseinrichtung auch einen für die Ressourceneffizienz der Vorrichtung charakteristischen Wert unter Berücksichtigung der Ressourcenverbräuche beider Anlagenteile.

Weitere Vorteile und Ausführungsformen ergeben sich aus den beigefügten Zeichnungen.

Darin zeigen:
- Fig. 1: eine schematische Darstellung einer Anlage zum Herstellen von Behältnissen;
- Fig. 2: eine diagrammartige Darstellung zur Veranschaulichung der Erfindung; und
- Fig. 3: eine Darstellung zur Aufgliederung der einzelnen Ressourcenverbräuche.

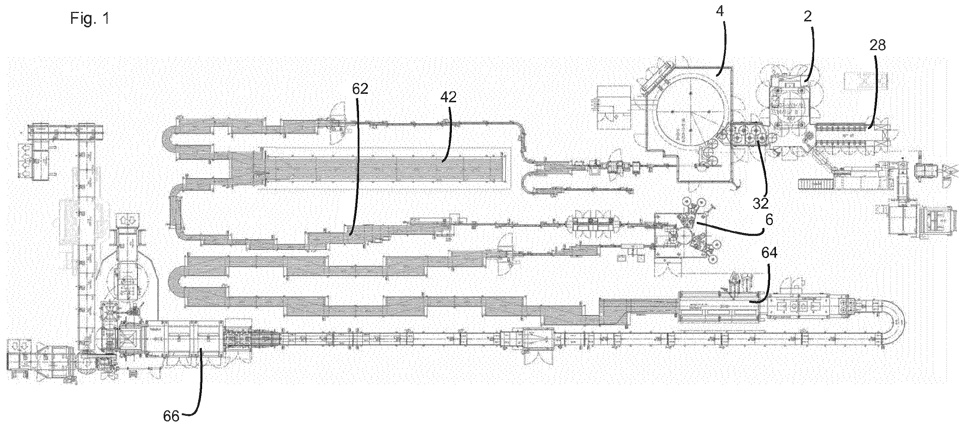

Fig. 1 zeigt eine schematische Darstellung einer Anlage zum Herstellen von Getränkebehältnissen. Diese Anlage weist dabei eine Vielzahl von Komponenten zum Behandeln von Behältnissen auf. So ist eine Blasformmaschine, insbesondere eine Streckblasmaschine 2 vorgesehen, welche Kunststoffvorformlinge zu Kunststoffbehältnissen umformt. Im Anschluss daran werden diese Behältnisse mittels einer Fülleinrichtung 4 befüllt. Dabei kann weiterhin eine Kühleinrichtung 32 vorgesehen sein, welche die Behältnisse kühlt, etwa durch Beaufschlagung mit einer Flüssigkeit oder mit einem Gas. Das Bezugszeichen 28 kennzeichnet einen Ofen, mittels dessen die Kunststoffvorformlinge auf eine Temperatur erwärmt werden, welche eine Umformung ermöglicht. Daneben kann auch eine Sterilisationseinrichtung zum Sterilisieren der Behältnisse vorgesehen sein.

Im Anschluss daran werden die gefertigten Kunststoffbehältnisse über Transporteinrichtungen transportiert, wobei auch eine Pufferstrecke 42 vorgesehen sein kann. Das Bezugszeichen 62 kennzeichnet ebenfalls eine Transporteinrichtung. Anschließend werden die Behältnisse mittels einer Etikettiereinrichtung 6 etikettiert. Die Bezugszeichen 64 und 66 kennzeichnen grob schematisch Packeinrichtungen, welche beispielsweise mehrere Behältnisse zu Behältnisgruppen zusammenfassen können. Genauer gesagt bezeichnet das Bezugszeichen 64 einen Packer und das Bezugszeichen 66 einen Palettierer bzw. eine Lagenbildungseinrichtung für einen Palettierer. Weiterhin können auch noch weitere Palettiereinrichtungen und dergleichen vorgesehen sein. Hinsichtlich jedes einzelnen Anlagenteils, wie beispielsweise der Blasformmaschine oder auch der Fülleinrichtung 4 kann die jeweilige Ressourceneffizienz, wie oben dargestellt, ermittelt werden. Daneben ist auch eine übergeordnete Bestimmung der Ressourceneffizienz möglich.

Auch wäre es denkbar, die Ressourceneffizienz eines Anlagenteils im Hinblick auf mehrere Ressourcen zu ermitteln, etwa im Fall einer Blasmaschine die Ressourceneffizienz im Hinblick auf die (elektrische) Energie und auch im Hinblick auf die verwendete Blasluft. Daneben wäre es auch möglich, Anlagenteile in deren ressourcenverbrauchende Unterkomponenten aufzugliedern und für wenigstens eine und bevorzugt mehrere dieser Unterkomponenten die Ressourceneffizienz zu ermitteln.

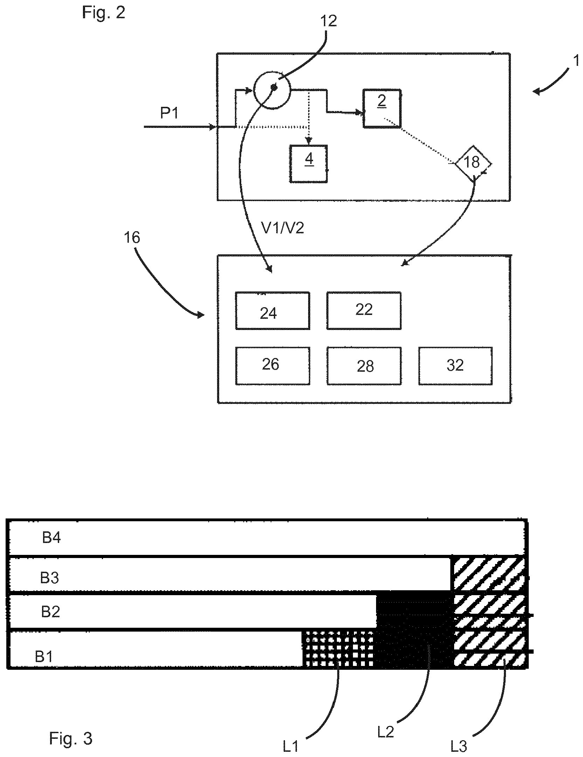

Fig. 2 zeigt eine schematische Darstellung zur Veranschaulichung eines erfindungsgemäßen Verfahrens. Dabei bezieht sich das Bezugszeichen 1 auf eine Vorrichtung zum Herstellen von Getränkebehältnissen, welche hier zwei schematisch dargestellte Anlagenteile 2 und 4 aufweist. Diesen Anlagenteilen wird dabei eine bestimmte Ressource (Pfeil P1) zugeführt. Das Bezugszeichen 12 kennzeichnet eine Erfassungseinheit, welche einen Verbrauch dieser Ressource durch den ersten Anlagenteil 2 erfasst. Weiterhin kann die Ressource auch dem zweiten Anlagenteil 4 zugeführt werden, wobei es, wie oben erwähnt, denkbar ist, dass ein Ressourcenverbrauch der dem Anlagenteil 2 zugeführten Ressource ebenfalls durch die Erfassungseinheit 12 oder eine andere Erfassungseinheit bestimmt wird, es jedoch auch denkbar ist, dass, wie durch die gepunktete Linie veranschaulicht, die Menge der dem Anlagenteil 2 zugeführten Ressource nicht unmittelbar bestimmt wird.

Das Bezugszeichen 16 bezieht sich in seiner Gesamtheit auf eine Prozessoreinrichtung, welche insgesamt die Ressourceneffizienz bestimmt. Dabei wird, wie durch den Pfeil P2 veranschaulicht, sowohl in einem Betriebszustand B1, als auch in einem Betriebszustand B2 der Prozessoreinheit jeweils der betreffende erfasste Ressourcenverbrauch V1 bzw. V2 hinzugeführt. Eine Bestimmungseinheit 18 kann dabei die Menge der produzierten Einheiten, beispielsweise die Menge an produzierten Behältnissen, bestimmten. Die Prozessoreinheit 16 weist weiterhin eine Speichereinrichtung 22 auf, welche die jeweiligen Ressourcenverbräuche V1, V2 abspeichert und dabei beispielsweise auch während des laufenden Betriebs bzw. fortlaufend abspeichert. Das Bezugszeichen 24 kennzeichnet eine Klassifizierungseinrichtung bzw. Zuordnungseinrichtung, welche den aufgenommenen Verbräuchen jeweils die einzelnen Betriebszustände B1 bzw. B2 zuordnet, so dass eine auf die Betriebszustände bezogene Abspeicherung möglich ist. Mittels Verrechnungs- bzw. Berechnungseinrichtungen 26, 28, die jedoch auch in einer gemeinsamen Berechnungseinheit angeordnet sein können, wird der Ressourcenverbrauch des Anlagenteils in hier zwei verschiedenen Produktionszuständen bestimmt.

Eine weitere Verrechnungseinheit 32 bildet unter Zugrundelegung der von den Verrechnungseinheiten 26 und 28 gebildeten auf die Betriebszustände bezogenen Ressourcenverbräuche einen Gesamtressourcenverbrauch des gesamten Anlagenteils.

In Fig. 2 wurde das Verfahren hier anhand einzelner Einrichtungen bzw. Vorrichtungsteile bestimmt. Es wird darauf hingewiesen, dass jedoch jeweils auch die gleiche Berechnungseinheit berechnen kann und die hier dargestellten Berechnungseinheiten 26, 28, 32 hier jeweils einzelne Verfahrensschritte darstellen können, die für das erfindungsgemäße Verfahren ablaufen.

Es wäre daher auch möglich, die Anlagenteile 2, 4 zusammenzufassen, falls beide Anlageteile eine gemeinsame Aufgabe, beispielsweise die Herstellung von Getränkebehältnissen, erfüllen, und auch jeweils einheitliche Betriebszustände besitzen.

Fig. 3 zeigt eine Darstellung der einzelnen Betriebszustände bzw. deren zeitlicher Dauern. Dabei kennzeichnet der Betriebszustand B1 denjenigen Zustand, in dem tatsächlich produziert wird. Der Betriebszustand B2 bzw. dessen zeitliche Länge setzt sich aus der Zeit, in der tatsächlich produziert wird zusammen und zusätzlich einem gewissen Verlust bzw. einer Auszeit L1, wie sie beispielsweise durch Fehler in der Maschine auftreten kann. Der Betriebszustand B3 bzw. dessen zeitliche Länge weist zusätzlich noch einen Verlust bzw. eine Auszeit L2 auf, wie sie beispielsweise durch von außen verursachte Stillstandzeiten auftreten kann. Der Betriebszustand B4 bzw. dessen zeitliche Länge kennzeichnet einen gesamten Produktionszustand, das heißt hier einen Zustand, in dem die Maschine teilweise keine Produkte produziert und wobei sämtliche Auszeiten eingerechnet sind. Hier ist noch eine Auszeit bzw. ein Verlust L3 beabsichtigt, wie sie etwa durch geplante Auszeiten entstehen.

Falls beispielsweise in dem gezeigten Beispiel ein Ressourcenverbrauch bzw. ein Verbrauch an elektrischer Energie in dem Betriebszustand B4, also dem gesamten Produktionszustand bei 100 KWh liegt und ein Verbrauch an elektrischer Energie in dem Betriebszustand B1, in dem tatsächlich produziert wird, bei 75 KWh, so ergibt sich hieraus eine Ressourceneffizienz von 75%. Dabei wäre es auch möglich, diese Betrachtungen für mehrere unterschiedliche Ressourcen durchzuführen. Bevorzugt wird auf eine zeitliche Betrachtung der einzelnen Ressourcen verzichtet.

Es ist weiterhin auch möglich, viele Anlagenteile zusammenzufassen, beispielsweise in einer Maschine, einer Anlage, einer Fabrik, einem Konzern oder sogar einer Branche, selbst, wenn diese unterschiedliche Aufgaben besitzen und auch unterschiedliche Zustände besitzen, wobei wenigstens einer dieser Betriebszustände der jeweiligen Aufgabe des Teilsystems entspricht. Die gesamte Ressourceneffizienz wird, wie oben dargestellt, bevorzugt durch eine Quotientenbildung ermittelt, und entspricht daher dem Anteil der verwendeten Ressource im Rahmen ihrer eigentlichen, das heißt wertschöpfenden, Aufgabe. Es wird darauf hingewiesen, dass ein derartiger Quotient direkt aus den einzelnen Betriebszuständen gebildet werden kann. Es ist jedoch auch möglich bzw. bevorzugt, den Quotienten aus Gruppen, beispielsweise Gruppen von Zuständen zu bilden und insbesondere aus solchen Gruppen, welche sich in nach einer bestimmten Systematik bilden lassen wie insbesondere aber nicht ausschließlich einer OEE (overall equipment effectiveness) Systematik.

Diese OEE bzw. Gesamtanlageneffektivität ist dabei eine Kennzahl bzw. ein Maß für die Wertschöpfung einer Anlage und kann beispielsweise als das Produkt eines Verfügbarkeitsfaktors, eines Leistungsfaktors und eines Qualitätsfaktors definiert sein.

Im Rahmen eines gesamten Systems können mehrere Produktionseinheiten bzw. Anlagenteile voneinander unabhängig vorhanden sein oder auch miteinander verkettet sein, beispielsweise ein bestimmtes Produkt in einer Abfolge behandeln, wie beispielsweise ein Behältnis befüllen und anschließend etikettieren. Eine Berechnungseinheit kann dabei eine Berechnung der Laufzeit durchführen und auch eine Berechnung der Laufzeit in der Vergangenheit auf Basis beispielsweise permanent aufgezeichneter Informationen. So ist es möglich, dass die oben erwähnte Speichereinrichtung 22 in einem Betriebszustand ständig die jeweiligen Betriebszustände erfasst und auch die jeweiligen Ressourcenverbräuche kontinuierlich bestimmt. Auf diese Weise kann die Ressourceneffizienz auch zu einem späteren Zeitpunkt ermittelt werden.

Vorteilhaft weist eine entsprechende Anlage auch eine Anzeigeneinrichtung auf, um die jeweiligen Kennzahlen, wie hier die Ressourceneffizienz darzustellen. Die Erfassungseinheit 12, bzw. der gesamte Anlagenteil 2, kann bevorzugt Informationen betreffend seiner Betriebs- und Produktionszustände in Form von Signalen liefern. Vorteilhaft wird dabei auch ein Identifikationssignal ausgegeben, welches den betreffenden Anlagenteil charakterisiert. Bei der Erfassungseinheit kann es sich beispielsweise um einen Messfühler oder dergleichen handeln, welcher den Verbrauch eines Mediums oder auch einer Energiegröße bestimmt. Neben elektrischer Energie können jedoch auch, wie oben erwähnt, beliebige flüssige, gasförmige oder feste Stoffe, die als Verbrauch während der Betrachtung anfallen, erfasst werden.

Dabei ist es möglich, dass die Signale, welche die Information bezüglich der Betriebs- oder Produktionszustände darstellen, von einer Steuerung erzeugt werden (beispielsweise, indem sie von einem internen Signal abgeleitet werden), es wäre jedoch auch möglich, dass diese Signale durch Bedieneingaben erfasst werden, das heißt insbesondere im Rahmen einer manuellen Erfassung durch den Bediener oder dass Sensorinformationen verarbeitet werden, wie beispielsweise eines Flaschenzählers, einer Lichtschranke zur Ermittlung eines Behältnismangels oder auch einer Verrechnungseinheit. Auch ist es möglich, diese dargestellten Verfahrensweisen zu kombinieren.

Bei einem weiteren vorteilhaften Verfahren wird der Verbrauch in einem beliebigen Zeitintervall dargestellt und es werden vorteilhaft die Betriebszustände in dem gleichen Zeitintervall zugeordnet. Weiterhin wird, wie oben erwähnt, der jeweils bestimmte Verbrauch zu den jeweiligen Betriebszuständen bzw. mit diesen verknüpft.

Daneben erfolgt vorteilhaft eine Verbrauchssummenbildung für das Andauern jedes angefallenen Betriebszustands während eines betrachteten Zeitintervalls. Schließlich erfolgt vorteilhaft eine Quotientenbildung über die Verbrauchssummen der einzelnen Betriebszustände oder die in die Gruppen zusammengefassten Betriebszustände. Es wäre dabei möglich, das Verfahren kontinuierlich anzuwenden, jedoch auch, dieses inkrementell bei jeder Betriebszustandsänderung anzuwenden. Wie erwähnt, kann das Verfahren auch über einen bestimmten Zeitraum hinweg unter Verwendung von bereits gespeicherten Daten angewandt werden. Dabei ist es möglich, diesen Zeitraum frei auszuwählen, beispielsweise einen Schichtzeitraum, einen bestimmen Tag, ein Monat, ein Jahr oder auch andere.

Damit beschreibt die Erfindung ein technisches Verfahren zur Bestimmung einer Ressourcenkoeffizienz von Produktionsanlagen und insbesondere von Anlagen zur Herstellung von Getränkebehältnissen. Dieses Verfahren ermöglicht es dem Anwender, mittels einer oder mehrerer gebildeter Kennzahlen Aussagen über den qualitativen und quantitativen Ausnutzungsgrad der jeweiligen Ressource oder Produktionsanlage zu treffen. Wie erwähnt, werden dabei über eine oder mehrere technische Einrichtungen Informationen zu Produktionszuständen und zu einem Ressourcenverbrauch erfasst, diese bei Bedarf umgerechnet, speziell miteinander verknüpft, das heißt insbesondere klassifiziert und als Kennzahl zur Verfügung gestellt. Dabei ist es möglich, dass diese Kennzahl kontinuierlich ausgegeben wird oder auch auf Produktionseinheiten bezogen zur Verfügung gestellt wird.

Neben der hier gezeigten Ressourceneffizienz ist es auch möglich, weitere Kennzahlen zu ermitteln, was größtenteils durch einfache mathematische Operationen möglich ist. So ist es denkbar, zusätzlich eine Qualitätsrate und eine Leistungsfähigkeit bzw. Performance zu berücksichtigen.

Daneben wäre es auch möglich, einen Qualitätsverlustfaktor zu ermitteln, der sich beispielsweise aus Energieverlustanteilen aufgrund von Qualitätsmängeln ergibt. So könnten beispielsweise auch fehlerhaft gefertigte Getränkebehältnisse berücksichtigt werden. Weiterhin kann ein Leistungsfähigkeitsverlustfaktor bestimmt werden, der sich beispielsweise aufgrund von Energieverlustanteilen aufgrund von Störungen ergibt. Daneben kann auch ein Verfügbarkeitsverlustfaktor ermittelt werden, der sich aus Energieverlustanteilen aufgrund von geplanten Stillständen oder auch beispielsweise aufgrund von Reinigungsvorgängen ergibt.

Mit anderen Worten kann das oben erwähnte Verhältnis zwischen dem eigentlichen Arbeitsbetrieb, in dem Behältnisse hergestellt werden, und der gesamten Produktionszeit auch modifiziert werden, so dass ein anderer Betriebszustand, beispielsweise ein Betriebszustand, in dem Wartungen durchgeführt werden, ins Verhältnis zu der ganzen Produktionslaufzeit gesetzt wird. Auch derartige Kennzahlen können bedeutsam sein, wenn beispielsweise für Anlagen zum Herstellen von Getränkebehältnissen ermittelt werden soll, wie hoch der Anteil eines Reinigungsaufwands, beispielsweise bezogen auf eine bestimmte Ressource, wie Energie, ist. Auch kann beispielsweise ein relativer Ressourcenbedarf an Reinigungsmedien während der gesamten Laufzeit der Anlage überprüft werden. Auf diese Weise ist beispielsweise eine Aussage darüber möglich, welche Betriebszustände einen besonders hohen Bedarf an Reinigungsmittel aufweisen.

Mithilfe der vorliegenden Erfindung ist es möglich, beispielsweise auch Grenzwerte des aktuellen Energiebedarfs, bezogen auf bestimmte Produktionsgrößen, wie die Zeit oder den Ausstoß zu berücksichtigen. Die Ressourceneffizienz konsolidiert hier vorteilhaft die Werte bezüglich der Betriebszustände und ermöglich so auch eine Beurteilung eines energetischen Effizienzgrades über einen bestimmten Zeitraum hinweg, vorteilhaft, ohne hierbei Grenzwerte oder Grenzwertverletzungen zu betrachten.

Insbesondere erlaubt es die Erfindung auch, Aussagen für unterschiedliche Betriebszustände der Anlage oder eines Anlagenteils zu ermitteln.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2,4: Anlagenteile
- 6: Etikettiereinrichtung
- 12: Erfassungseinheit
- 16: Prozessoreinrichtung
- 18: Bestimmungseinheit
- 22: Speichereinrichtung
- 24: Klassifizierungseinrichtung
- 26, 28, 32: Verrechnungseinrichtungen/Ofen
- 32: Kühleinrichtung
- 64, 66: Packeinrichtungen
- P1: Ressourcenzuführung
- B1, B2, B3, B4: Betriebszustand eines Anlageteils
- B4: gesamter Produktionszustand
- V1, V2: Ressourcenverbrauch
- L1-L3: Auszeiten

## Patentansprüche

1. Verfahren zum Ermitteln einer Ressourceneffizienz einer Anlage (1) zum Herstellen von Getränkebehältnissen, wobei die Anlage (1) wenigstens einen ressourcenverbrauchenden Anlagenteil (2) aufweist, wobei der Anlagenteil (2) wenigstens zeitweise in einem ersten Betriebszustand (B1) betrieben wird, in welchem ein Produkt hergestellt wird und der Anlagenteil (2) in diesem Betriebszustand (B1) einen ersten Ressourcenverbrauch (V1) aufweist und wobei der Anlagenteil (2) wenigstens zeitweise in einem zweiten Betriebszustand (B2) betrieben wird und in diesem zweiten Betriebszustand (B2) einen zweiten Ressourcenverbrauch (V2) aufweist, wobei wenigstens ein dem ersten Betriebszustand (B1) zuordenbarer erster Ressourcenverbrauch (V1) und wenigstens ein dem zweiten Betriebszustand (B2) zuordenbarer zweiter Ressourcenverbrauch (V2) bestimmt wird, und den Betriebszuständen (B1, B2) der Ressourcenverbrauch (V1, V2) zugeordnet wird, wobei wenigstens ein für wenigstens einen Ressourcenverbrauch charakteristischer Wert in einer Speichereinrichtung abgespeichert wird,
wobei unter Berücksichtigung des ersten Ressourcenverbrauchs (V1) und des zweiten Ressourcenverbrauchs (V2) ein für die Ressourceneffizienz des Anlagenteils (2) charakteristischer Wert bestimmt wird, wobei sich die Ressourcenverbräuche (V1, V2) in den unterschiedlichen Betriebszuständen voneinander unterscheiden, wobei die Betriebszustände aus einer Gruppe von Betriebszuständen ausgewählt sind, welche eine Arbeitszeit der Anlage aufweisen, eine Produktionszeit, welche sich aus der Arbeitszeit abzüglich einer eingeplanten Stillstandszeit zusammen setzt, einer Gesamtzeit, welche sich wiederum aus der Produktionszeit abzüglich eventueller externer Störungen zusammen setzt und einer eigentlichen Betriebszeit, in der tatsächlich produziert wird, welche sich aus der oben erwähnten Produktionszeit abzüglich tatsächlicher Eigenstörungen der Anlage zusammen setzt, wobei die Ressource aus einer Vielzahl von Ressourcen ausgewählt ist, welche Energie, insbesondere elektrische Energie, Wärme, Medien zum Behandeln der Behältnisse, Druckluft, Betriebskosten, Personalaufwand, und weiter wobei
die Anlage (1) eine Erfassungseinrichtung (12) aufweist, welche den Ressourcenverbrauch des Anlagenteils (2) ermittelt, und weiter wobei die Erfassungseinheit (12) Informationen betreffend seiner Betriebs- und Produktionszustände in Form von Signalen liefert, indem ein Identifikationssignal ausgegeben wird, welches den betreffenden Anlagenteil charakterisiert, wobei es sich bei der Erfassungseinheit um einen Messfühler oder dergleichen handelt, welcher den Verbrauch eines Mediums oder auch einer Energiegröße bestimmt, wobei neben elektrischer Energie auch beliebige flüssige, gasförmige oder feste Stoffe, die als Verbrauch während der Betrachtung anfallen, erfasst werden, wobei die Signale, welche die Information bezüglich der Betriebs- oder Produktionszustände darstellen, von einer Steuerung erzeugt werden.

2. Verfahren nach Anspruch 1,
**dadurch gekennzeichnet, dass**
der Anlagenteil (2) in mehr als zwei unterschiedlichen Betriebszuständen (B1, B2, B3, B4) betrieben wird.

3. Verfahren nach wenigstens einem der vorangegangenen Ansprüche,
**dadurch gekennzeichnet, dass**
die Anlage (1) eine Vielzahl von ressourcenverbrauchenden Anlagenteilen (2, 4, 6) aufweist und für wenigstens zwei Anlagenteile (2, 4) jeweils ein für die Ressourceneffizienz dieses Anlagenteils (2, 4) charakteristischer Wert bestimmt wird.

4. Verfahren nach Anspruch 3,
**dadurch gekennzeichnet, dass**
für wenigstens einen Anlagenteil (2, 4) kein diesem Anlagenteil unmittelbar zuordenbarer Ressorcenverbrauch bestimmt wird.

5. Verfahren nach wenigstens einem der vorangegangenen Ansprüche,
**dadurch gekennzeichnet, dass**
eine für die Anlage (1) charakteristische Gesamtressourceneffizienz unter Berücksichtigung der Ressourceneffizienzen wenigstens zweier Anlagenteile (2, 4) bestimmt wird.

6. Verfahren nach wenigstens einem der vorangegangenen Ansprüche,
**dadurch gekennzeichnet, dass**
wenigstens ein Anlagenteil aus einer Gruppe von Anlagenteilen ausgewählt ist, welche Blasformmaschinen (2) Sterilisationseinrichtungen (32), Fülleinrichtungen (4) zum Befüllen von Behältnissen, Verschließeinrichtungen zum Verschließen von Behältnissen, Erwärmungseinrichtungen (28) zum Erwärmen von Kunststoffvorformlingen und dergleichen enthält.

7. Verfahren nach wenigstens einem der vorangegangenen Ansprüche
**dadurch gekennzeichnet, dass**
der für die Ressourceneffizienz des Anlagenteils charakteristische Wert durch wenigstens eine Quotientenbildung bestimmt wird.

8. Anlage (1) zur Herstellung von mit Flüssigkeiten befüllten Behältnissen mit einem ersten ressourcenverbrauchenden Anlagenteil (2), der zeitweise in einem ersten Betriebszustand (B1) betreibbar ist und der zeitweise in einem zweiten Betriebszustand (B2) betreibbar ist, wobei sich der erste Betriebszustand (B1) und der zweite Betriebszustand (B2) zumindest hinsichtlich eines Ressourcenverbrauchs unterscheiden, und wobei ein Betriebszustand (B1) ein Produktionszustand des Anlagenteils (2) ist,
wobei die Anlage (1) eine Erfassungseinrichtung (12) aufweist, welche den Ressourcenverbrauch des Anlagenteils (2) ermittelt, sowie eine Zuordnungseinrichtung (24), welche dem ersten Betriebszustand (B1) einen für diesen ersten Betriebszustand (B1) charakteristischen ersten Ressourcenverbrauch (V1) zuordnet und welche dem zweiten Betriebszustand (B2) einen für diesen zweiten Betriebszustand (B2) charakteristischen zweiten Ressourcenverbrauch (V2) zuordnet und eine Prozessoreinrichtung (16), welche unter Berücksichtigung des ersten Ressourcenverbrauchs (V1) und des zweiten Ressourcenverbrauchs (V2) einen für die Ressourceneffizienz des Anlagenteils (2) charakteristischen Wert bestimmt, wobei sich die Ressourcenverbräuche (V1, V2) in den unterschiedlichen Betriebszuständen voneinander unterscheiden, wobei die Betriebszustände aus einer Gruppe von Betriebszuständen ausgewählt sind, welche eine Arbeitszeit der Anlage aufweisen, eine Produktionszeit, welche sich aus der Arbeitszeit abzüglich einer eingeplanten Stillstandszeit zusammen setzt, einer Gesamtzeit, welche sich wiederum aus der Produktionszeit abzüglich eventueller externer Störungen zusammen setzt und einer eigentlichen Betriebszeit, in der tatsächlich produziert wird, welche sich aus der oben erwähnten Produktionszeit abzüglich tatsächlicher Eigenstörungen der Anlage zusammen setzt, wobei die Ressource aus einer Vielzahl von Ressourcen ausgewählt ist, welche Energie, insbesondere elektrische Energie, Wärme, Medien zum Behandeln der Behältnisse, Druckluft, Betriebskosten, Personalaufwand, und weiter wobei die Erfassungseinheit (12) Informationen betreffend seiner Betriebs- und Produktionszustände in Form von Signalen liefert, indem ein Identifikationssignal ausgegeben wird, welches den betreffenden Anlagenteil charakterisiert, wobei es sich bei der Erfassungseinheit um einen Messfühler oder dergleichen handelt, welcher den Verbrauch eines Mediums oder auch einer Energiegröße bestimmt, wobei neben elektrischer Energie auch beliebige flüssige, gasförmige oder feste Stoffe, die als Verbrauch während der Betrachtung anfallen, erfasst werden, wobei die Signale, welche die Information bezüglich der Betriebs- oder Produktionszustände darstellen, von einer Steuerung erzeugt werden,

9. Anlage (1) nach Anspruch 8,
**dadurch gekennzeichnet, dass**
die Anlage (1) einen zweiten Anlagenteil (4) aufweist, der zeitweise in einem ersten Betriebszustand (B1) betreibbar ist und der zeitweise in einem zweiten Betriebszustand (B2) betreibbar ist, wobei sich der erste Betriebszustand (B1) und der zweite Betriebszustand (B2) zumindest hinsichtlich des Ressourcenverbrauchs unterscheiden, und wobei ein Betriebszustand (B2) ein Produktionszustand des Anlagenteils (4) ist.

10. Anlage (1) nach Anspruch 8,
**dadurch gekennzeichnet, dass**
die Anlage wenigstens eine Speichereinrichtung (22) aufweist, die zum Abspeichern wenigstens eines Wertes geeignet und bestimmt ist, der für wenigstens einen Ressourcenverbrauch charakteristisch ist.

## Claims

1. A method of determining the resource efficiency of a plant (1) for the production of drinks containers, wherein the plant (1) has at least one resource-consuming part (2), wherein the part (2) of the plant is operated at least for a time in a first operative state (B1) in which a product is produced and the part (2) of the plant has a first resource consumption (V1) in this operative state (B1), and wherein the part (2) of the plant is operated at least for a time in a second operative state (B2) and has a second resource consumption (V2) in this second operative state (B2), wherein at least one first resource consumption (V1) capable of being allocated to the first operative state (B1) and at least one second resource consumption (V2) capable of being allocated to the second operative state (B2) are determined and the resource consumption (V1, V2) is allocated to the operative states (B1, B2), wherein at least one value characteristic of at least one resource consumption is stored in a memory device,
wherein
a value characteristic of the resource efficiency of the part (2) of the plant is determined while taking into consideration the first resource consumption (V1) and the second resource consumption (V2), wherein the resource consumption (V1, V2) differs in the various operative states, wherein the operative states are selected from a group of operative states which have an operating time of the plant, a production time, which is formed from the working time minus a planned stoppage time, an overall time, which in turn is formed from the production time minus possible external malfunctions and an actual operating time, in which production actually takes place, which is formed from the production time as mentioned above minus actual internal malfunctions of the plant, wherein the resource is selected from a plurality of resources which include energy, in particular electrical energy, heat, media for the treatment of the containers, compressed air, operating costs, personnel costs and the like,
and further wherein
the plant (1) has a detection device (12) which determines the resource consumption of the part (2) of the plant, and further wherein the detection device (12) supplies information relating to its operative and production states in the form of signals, by emitting an identification signal, which characterizes the part of the plant in question, wherein the detection device is a measurement sensor or the like, which determines the consumption of a medium or even an energy parameter, wherein beside to electrical energy also any liquid, gaseous or solid substances which occur as consumption during the observation can be detected, wherein the signals which represent the information with respect to the operative or production states are produced by a control means.

2. A method according to claim 1,
**characterized in that**
the part (2) of the plant is operated in more than two different operative states (B1, B2, B3, B4).

3. A method according to at least one of the preceding claims, **characterized in that**
the plant (1) has a plurality of resource-consuming parts (2, 4, 6) and a value characteristic of the resource efficiency of at least two parts (2, 4) of the plant is determined in each case for this respective part (2, 4) of the plant.

4. A method according to claim 3,
**characterized in that**
for at least one part (2, 4) of the plant a resource consumption is determined which is not capable of being allocated directly to the at least one part of the plant.

5. A method according to at least one of the preceding claims,
**characterized in that**
an overall resource efficiency characteristic of a plant (1) is determined whilst taking into consideration the resource efficiency of at least two parts (2, 4) of the plant.

6. A method according to at least one of the preceding claims,
**characterized in that**
at least one part of the plant is selected from a group of parts of the plant, which includes blow moulding machines (2), sterilization devices (32), filling devices (4) for filling containers, closure devices for closing containers, heating devices (28) for heating plastics material preforms and the like.

7. A method according to at least one of the preceding claims,
**characterized in that**
the value characteristic of the resource efficiency of the part of the plant is determined by at least one quotient formation.

8. A plant (1) for the production of containers filled with liquids, with a first resource-consuming part (2) of the plant which is capable of being operated for a time in a first operative state (B1) and which is capable of being operated for a time in a second operative state (B2), wherein the first operative state (B1) and the second operative state (B2) differ at least with respect to a resource consumption and wherein one operative state (B1) is a production state of the part (2) of the plant,
wherein
the plant (1) has a detection device (12) which determines the resource consumption of the part (2), as well as an allocation device (24), which allocates to the first operative state (B2) a first resource consumption (V1) characteristic of this first operative state (B1) and which allocates to the second operative state (B2) a second resource consumption (V2) characteristic of this second operative state (B2), and a processor device (16) which determines a value characteristic of the resource efficiency of the part (2) of the plant whilst taking into consideration the first resource consumption (V1) and the second resource consumption (V2), wherein the resource consumption (V1, V2) in the various operative states differ, wherein the operative states are selected from a group of operative states which have an operating time of the plant, a production time, which is formed from the working time minus a planned stoppage time, an overall time, which in turn is formed from the production time minus possible external malfunctions and an actual operating time, in which production actually takes place, which is formed from the production time as mentioned above minus actual internal malfunctions of the plant, wherein the resource is selected from a plurality of resources which include energy, in particular electrical energy, heat, media for the treatment of the containers, compressed air, operating costs, personnel costs,
and further wherein
the detection device (12) supplies information relating to its operative and production states in the form of signals, by emitting an identification signal, which characterizes the part of the plant in question, wherein the detection device is a measurement sensor or the like, which determines the consumption of a medium or even an energy parameter, wherein beside to electrical energy also any liquid, gaseous or solid substances which occur as consumption during the observation are detected, wherein the signals which represent the information with respect to the operative or production states are produced by a control means.

9. Plant (1) according to claim 8,
**characterized in that**
the plant (1) has a second part (4) of the plant which is capable of being operated for a time in a first operative state (B1) and which is capable of being operated for a time in a second operating state (B2), wherein the first operative state (B1) and the second operative state (B2) differ at least with respect to the resource consumption, and wherein one operative state (B2) is a production state of the part (4) of the plant.

10. A plant (1) according to claim 8,
**characterized in that**
the plant has at least one memory device (22) which is suitable and intended for storing at least one value which is characteristic of at least one resource consumption.

## Revendications

1. Procédé pour déterminer une utilisation efficace des ressources d'une installation (1) destinée à fabriquer des contenants pour boisson, dans lequel l'installation (1) présente au moins une partie d'installation de consommation de ressources (2), dans lequel la partie d'installation (2) fonctionne au moins par intermittence dans un premier état de fonctionnement (B1), dans lequel un produit est fabriqué, et la partie d'installation (2) présente dans cet état de fonctionnement (B1) une première consommation de ressources (V1) et dans lequel la partie d'installation (2) fonctionne au moins par intermittence dans un deuxième état de fonctionnement (B2) et présente dans ce deuxième état de fonctionnement (B2) une deuxième consommation de ressources (V2), dans lequel au moins une première consommation de ressources (V1) pouvant être associée au premier état de fonctionnement (B1) et au moins une deuxième consommation de ressources (V2) pouvant être associée au deuxième état de fonctionnement (B2) sont déterminées, et la consommation de ressources (V1, V2) est associée aux états de fonctionnement (B1, B2), dans lequel au moins une valeur caractéristique d'au moins une consommation de ressources est mise en mémoire dans un dispositif mémoire,
dans lequel
une valeur caractéristique de l'utilisation efficace des ressources de la partie d'installation (2) est déterminée en prenant en considération la première consommation de ressources (V1) et la deuxième consommation de ressources (V2), dans lequel
les consommations de ressources (V1, V2) dans les différents états de fonctionnement se différencient l'une de l'autre, dans lequel les états de fonctionnement sont sélectionnés dans un groupe d'états de fonctionnement, lesquels présentent un temps de travail de l'installation, un temps de production, lequel se compose du temps de travail moins un temps d'arrêt prévu, d'un temps total, lequel se compose lui-même du temps de production moins d'éventuelles perturbations externes et d'un temps de fonctionnement proprement dit, au cours duquel la production est effective, lequel se compose du temps de production mentionné ci-dessus moins les perturbations propres effectives de l'installation, dans lequel la ressource est sélectionnée parmi une pluralité de ressources, laquelle présente de l'énergie, en particulier de l'énergie électrique, de la chaleur, des milieux pour le traitement des contenants, de l'air comprimé, des coûts de fonctionnement, un coût salarial,
et en outre dans lequel
l'installation (1) présente un dispositif de détection (12), lequel détermine la consommation de ressources de la partie d'installation (2), et en outre dans lequel l'unité de détection (12) fournit des informations concernant ses états de fonctionnement et de production sous forme de signaux, du fait qu'un signal d'identification est émis, lequel caractérise la partie d'installation concernée, dans lequel l'unité de détection est un capteur de mesure ou similaire, lequel détermine la consommation d'un milieu ou bien d'une grandeur énergétique, dans lequel, à part l'énergie électrique, des substances liquides, gazeuses ou solides quelconques, qui sont produites en tant que consommation pendant l'observation, sont détectées, dans lequel les signaux, lesquels représentent l'information concernant les états de fonctionnement ou de production, sont générés par une commande.

2. Procédé selon la revendication 1,
**caractérisé en ce que**
la partie d'installation (2) fonctionne dans plus de deux états de fonctionnement (B1, B2, B3, B4) différents.

3. Procédé selon au moins l'une des revendications précédentes,
**caractérisé en ce que**
l'installation (1) présente une pluralité de parties d'installation (2, 4, 6) de consommation de ressources et respectivement une valeur caractéristique de l'utilisation efficace des ressources de cette partie d'installation (2, 4) est déterminée pour au moins deux parties d'installation (2, 4).

4. Procédé selon la revendication 3,
**caractérisé en ce que**
aucune consommation de ressources pouvant être associée directement à cette partie d'installation n'est déterminée pour au moins une partie d'installation (2, 4).

5. Procédé selon au moins l'une des revendications précédentes,
**caractérisé en ce que**
une utilisation efficace des ressources caractéristique de l'installation (1) est déterminée en prenant en considération les utilisations efficaces des ressources d'au moins deux parties d'installation (2, 4).

6. Procédé selon au moins l'une des revendications précédentes,
**caractérisé en ce que**
au moins une partie d'installation est sélectionnée dans un groupe de parties d'installation, lequel contient des machines de moulage par soufflage (2), des dispositifs de stérilisation (32), des dispositifs de remplissage (4) pour le remplissage de contenants, des dispositifs de fermeture pour la fermeture de contenants, des dispositifs de chauffage (28) pour le chauffage de préformes plastiques et similaires.

7. Procédé selon au moins l'une des revendications précédentes,
**caractérisé en ce que**
la valeur caractéristique de l'utilisation efficace des ressources de la partie d'installation est déterminée par au moins une formation de quotient.

8. Installation (1) pour la fabrication de contenants remplis de liquides avec une première partie d'installation (2) de consommation de ressources, qui peut fonctionner par intermittence dans un premier état de fonctionnement (B1) et qui peut fonctionner par intermittence dans un deuxième état de fonctionnement (B2), dans laquelle le premier état de fonctionnement (B1) et le deuxième état de fonctionnement (B2) se distinguent au moins en ce qui concerne une consommation de ressources, et dans laquelle un état de fonctionnement (B1) est un état de production de la partie d'installation (2),
dans laquelle
l'installation (1) présente un dispositif de détection (12), lequel détermine la consommation de ressources de la partie d'installation (2), ainsi qu'un dispositif d'affectation (24), lequel affecte une première consommation de ressources (V1) caractéristique de ce premier état de fonctionnement (B1) au premier état de fonctionnement (B1) et lequel affecte une deuxième consommation de ressources (V2) caractéristique de ce deuxième état de fonctionnement (B2) au deuxième état de fonctionnement (B2) et un système de processeur (16), lequel détermine une valeur caractéristique de l'utilisation efficace des ressources de la partie d'installation (2) en prenant en compte la première consommation de ressources (V1) et la deuxième consommation de ressources (V2), dans laquelle les consommations de ressources (V1, V2) dans les différents états de fonctionnement se distinguent l'une de l'autre, dans laquelle les états de fonctionnement sont sélectionnés dans un groupe d'états de fonctionnement, lesquels présentent un temps de travail de l'installation, un temps de production, lequel se compose du temps de travail moins un temps d'arrêt prévu, d'un temps total, lequel se compose lui-même du temps de production moins d'éventuelles perturbations externes et d'un temps de fonctionnement proprement dit, au cours duquel la production est effective, lequel se compose du temps de production mentionné ci-dessus moins les perturbations propres effectives de l'installation, dans lequel la ressource est sélectionnée parmi une pluralité de ressources, laquelle présente de l'énergie, en particulier de l'énergie électrique, de la chaleur, des milieux pour le traitement des contenants, de l'air comprimé, des coûts de fonctionnement, un coût salarial,
et en outre dans laquelle
l'unité de détection (12) fournit des informations concernant ses états de fonctionnement et de production sous forme de signaux, du fait qu'un signal d'identification est émis, lequel caractérise la partie d'installation concernée, dans laquelle l'unité de détection est un capteur de mesure ou similaire, lequel détermine la consommation d'un milieu ou bien d'une grandeur énergétique, dans laquelle, à part l'énergie électrique, des substances liquides, gazeuses ou solides quelconques, qui sont produites en tant que consommation pendant l'observation, sont également détectées, dans laquelle les signaux, lesquels représentent l'information concernant les états de fonctionnement ou de production, sont générés par une commande.

9. Installation (1) selon la revendication 8,
**caractérisée en ce que**
l'installation (1) présente une deuxième partie d'installation (4), qui peut fonctionner par intermittence dans un premier état de fonctionnement (B1) et qui peut fonctionner par intermittence dans un deuxième état de fonctionnement (B2), dans laquelle le premier état de fonctionnement (B1) et le deuxième état de fonctionnement (B2) se distinguent au moins en ce qui concerne la consommation de ressources, et dans laquelle un état de fonctionnement (B2) est un état de production de la partie d'installation (4).

10. Installation (1) selon la revendication 8,
**caractérisée en ce que**
l'installation présente au moins un dispositif mémoire (22), qui est adapté et destiné à mettre en mémoire au moins une valeur qui est caractéristique d'au moins une consommation de ressources.
